(19) Europäisches Patentamt
European Patent Office
Office européen des brevets

(11) **EP 3 350 663 B1**

(12) **EUROPÄISCHE PATENTSCHRIFT**

(45) Veröffentlichungstag und Bekanntmachung des Hinweises auf die Patenterteilung:
**25.12.2024   Patentblatt 2024/52**

(21) Anmeldenummer: **16766902.7**

(22) Anmeldetag: **12.09.2016**

(51) Internationale Patentklassifikation (IPC):
*H01F 7/16* (2006.01)          *G06F 3/01* (2006.01)
*G05G 5/03* (2008.04)          *G05G 1/02* (2006.01)

(52) Gemeinsame Patentklassifikation (CPC):
**G06F 3/016; G05G 5/03; H01F 7/1638;** G05G 1/02;
H01F 2007/1684

(86) Internationale Anmeldenummer:
**PCT/EP2016/071414**

(87) Internationale Veröffentlichungsnummer:
**WO 2017/046026 (23.03.2017 Gazette 2017/12)**

(54) **BEDIENEINHEIT FÜR EIN FAHRZEUG**

OPERATING UNIT FOR A VEHICLE

UNITÉ DE COMMANDE POUR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2015   DE 102015217661**

(43) Veröffentlichungstag der Anmeldung:
**25.07.2018   Patentblatt 2018/30**

(73) Patentinhaber: **BHTC GmbH
59557 Lippstadt (DE)**

(72) Erfinder:
• **PANKRATZ, Harri
59557 Lippstadt (DE)**
• **BANDLOW, Bastian
59557 Lippstadt (DE)**
• **STALLEIN, Matthias
59557 Lippstadt (DE)**
• **HEEPER, Lars
59557 Lippstadt (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
WO-A1-2006/124873          DE-A1- 10 043 805
DE-U1- 202011 004 616      FR-A1- 2 927 709

**Beschreibung**

Die Erfindung betrifft eine Bedieneinheit für ein Fahrzeug, bei der es sich beispielsweise um ein Infotainment-System zur Steuerung diverser Fahrzeugkomponenten handeln kann.

Bedieneinheiten mit Display-Baugruppen, auf denen beispielsweise menügesteuert verschiedene Symbolfelder darstellbar sind, über die Funktionen für eine Fahrzeugkomponente bei wirksamer Betätigung durch z.B. Niederdrücken (auch Force Sense genannt) ausgewählt werden können, erfreuen sich zunehmender Beliebtheit. Dabei soll dem Bediener die Auswahl einer Funktion taktil bestätigt werden, was beispielsweise durch eine zusätzliche aktive Bewegung des Bedienelements nach dessen Betätigung erfolgt (sogenanntes Force Feedback).

Aus DE-A-10 2008 035 907 und DE-A-10 2012 000 568 sind berührungsempfindliche Eingabegeräte bekannt. In FR-A- 2 927 709, DE-A-10 2009 007 243 und WO-A-2006/124873 ist jeweils ein Eingabegerät mit lateral federelastisch gelagertem Bedienelement für haptisches Feedback bekannt. Ferner ist in DE-A-100 43 805 ein elektromechanischer Aktuator für die Ventilsteuerung einer Verbrennungskraftmaschine offenbart, wobei der Aktuator mit einer Messspule versehen ist. In DE-U-20 2011 004 616 ist ein Hubanker-Antrieb beschrieben.

Aus Bauraum- und Kostengründen wird für das haptische Feedback oftmals ein Elektromagnet (Zugankermagnet) ohne Permanentmagnete als Aktuator eingesetzt. Der Stator eines derartigen Zugankermagnets ist also elektromagnetisch zu betreiben. Um die gewünschte Bewegung der Bedienoberfläche des Bedienelements einstellen zu können, muss der zeitliche Kraftverlauf am Aktuator genau einstellbar sein. Desweiteren kann es erforderlich sein, dass die Kraft, mit der das Bedienelement vor- und zurückbewegt wird, jeweils aktiv aufgebaut wird. Dies kann mittels eines Doppel-Zugankermagnets mit einem gemeinsamen Zuganker zwischen zwei elektromagnetischen Statoren realisiert werden.

Die Kraft eines Elektromagneten hängt bei langsam veränderlichen Magnetfeldern im Wesentlichen vom Ankerstrom und vom Luftspalt zwischen Zuganker und Stator ab. Der Kraftverlauf im Falle des haptischen Feedbacks ist jedoch sehr dynamisch und umfasst Frequenzanteile oberhalb von 1 kHz. Hierbei ist der Zusammenhang zwischen Strom und Kraft bei üblich verwendeten Automatenstählen oder Elektroblechen zur Magnetflussführung nicht trivial und nur durch eine sehr aufwendige Modellierung beschreibbar. Hinzu kommt noch, dass der Luftspalt wegen der mechanischen Toleranzen und der Bewegung der Bedienoberfläche nicht genau bekannt ist, weshalb die Kraftwirkung eines Zugankermagnets nur grob abschätzbar ist.

Aufgabe der Erfindung ist die Bereitstellung einer relativ genauen und kostengünstigen Kraftmessung in einem als Elektromagneten ausgeführten Aktuator für das haptische Feedback von Bedienelementen einer Bedieneinheit für ein Fahrzeug ermöglicht. Dabei kann der Elektromagnet als Einfach-Zuganker oder als Doppel-Zuganker ausgeführt sein.

Zur Lösung dieser Aufgabe wird mit der Erfindung eine Bedieneinheit für ein Fahrzeug vorgeschlagen, wobei die Bedieneinheit versehen ist mit

- einem Gehäuse mit einer Vorderseite,
- einem an der Vorderseite des Gehäuses angeordneten Bedienelement, das eine Bedienoberfläche aufweist, wobei das Bedienelement federelastisch gelagert ist,
- mindestens einem Sensor zur Erfassung einer Betätigungsbewegung des Bedienelements,
- mindestens einem (z.B. elektromagnetischen oder piezoelektrischen) Aktuator zur Rückmeldebewegung des Bedienelements bei einer durch den Sensor erfassten Betätigungsbewegung des Bedienelements und
- einer Auswerte- und Ansteuereinheit, die mit dem mindestens einen Sensor und mit dem Aktuator verbunden ist.

Erfindungsgemäß ist bei einer derartigen Bedieneinheit vorgesehen, dass

- der Aktuator als Zuganker-Elektromagnet mit einem ersten Stator, der eine erste Erregerspule aufweist, und einem Anker als Antriebselement ausgebildet ist,
- der Anker mit einer Messspule versehen ist, an der eine Messspannung anliegt, wenn der Anker von einem durch die erste Erregerspule erzeugten Magnetfluss durchdrungen ist, und
- die erste Erregerspule und die Messspule mit der Auswerte- und Ansteuereinheit verbunden sind, wobei mittels der Auswerte- und Ansteuereinheit die Kraft steuerbar und/oder regelbar ist, mit der der Anker des Aktuators in Richtung auf den ersten Stator zu bewegbar ist und/oder mit der die Auslenkbewegung des Ankers aus dessen Ruheposition sowie die Zurückbewegung des Ankers in dessen Ruheposition erfolgt.

Mit dem erfindungsgemäßen Ansatz der Messung des den Zuganker durchziehenden Magnetflusses mittels einer Messspule und der an dieser abfallenden induzierten Spannung lässt sich nun die Kraft und die Bewegung des Zugankers steuern bzw. regeln. Auch lässt sich nun die Bewegung des Zugankers gezielt dämpfen, so dass ein Überschwingen in der jeweiligen Endlage der Vor- und Zurückbewegung des Zugankers vermieden werden kann.

Es kann von weiterem Vorteil sein, wenn der Zuganker zwischen zwei elektromagnetisch betriebenen Statoren angeordnet ist. Bei dieser Ausführungsform der Erfindung weist der Zuganker also einen zweiten Stator mit einer zweiten Erregerspule auf, wobei die beiden Statoren beidseitig des Ankers angeordnet sind und auch die zweite Erregerspule mit der Auswerte- und Ansteuereinheit verbunden ist, wobei mittels der Auswerte- und Ansteuereinheit die jeweilige Kraft, mit der das Antriebselement in die jeweilige Richtung auf den ersten bzw. zweiten Stator zu bewegbar ist, und/oder die Auslenkbewegung des Antriebselements aus dessen Ruheposition sowie die Zurückbewegung des Antriebselements in dessen Ruheposition steuerbar und/oder regelbar ist.

Zur Realisierung eines möglichst homogenen haptischen Feedback über die gesamte Bedienoberfläche betrachtet kann die Bedieneinheit vorteilhafterweise versehen sein mit

- einem Gehäuse mit einer Vorderseite
- einem an der Vorderseite des Gehäuses angeordneten Bedienelement, das einen Massenschwerpunkt und eine Bedienoberfläche aufweist,
- wobei das Bedienelement an und/oder in dem Gehäuse längs einer zur Bedienoberfläche im Wesentlichen orthogonal verlaufenden Vertikalbewegungsachse und längs einer im Wesentlichen quer dazu verlaufenden Lateralbewegungsachse federelastisch gelagert ist,
- mindestens einem Sensor zur Erfassung einer Betätigungsbewegung des Bedienelements in Richtung der Vertikalbewegungsachse,
- einem in und/oder an dem Gehäuse angeordneten Aktuator zur Rückmeldebewegung des Bedienelements zumindest auch in der Lateralbewegungsachse bei einer erkannten Betätigungsbewegung des Bedienelements, wobei der Aktuator ein elektromagnetisch ansteuerbares, mit dem Bedienelement mechanisch gekoppeltes Antriebselement aufweist, das längs einer Wirkbewegungsachse vor- und zurückbewegbar ist, und
- einer Auswerte- und Ansteuereinheit, die mit dem Sensor und dem Aktuator verbunden ist,
- wobei der Massenschwerpunkt des Bedienelements auf der Wirkbewegungsachse des Antriebselements des Aktuators liegt.

Bei dieser Weiterbildung der Erfindung wird das aktive haptische Feedback einer Betätigung des Bedienelements durch eine laterale Auslenkung des Bedienelements realisiert. Zur Betätigung wird das Bedienelement in einer im Wesentlichen orthogonal zur Bedienoberfläche verlaufenden Vertikalbewegungsachse bewegt. Wird dann über einen Sensor diese Betätigungsbewegung erfasst (Force Sense), erfolgt eine aktive Bewegung des Bedienelements (Force Feedback) in z.B. einer Lateralbewegungsrichtung oder mit einer Bewegungskomponente in Lateralrichtung (z.B. durch eine mechanische Anregung längs einer im spitzen Winkel zur Bedienoberfläche verlaufenden Richtung z.B. nach links oder rechts, nach oben oder nach unten). Dabei ist darauf zu achten, dass das Bedienelement nicht verkippt. Das Bedienelement umfasst im Wesentlichen ein Display mit entsprechender Anzeigetechnik und -technologie (beispielsweise LCD-Display) und Hinterleuchtung, so dass es eine nicht unbeträchtliche Bautiefe aufweisen kann. Da der Aktuator im Idealfall allenfalls direkt unterhalb dieses Bedienelements angeordnet sein kann, greift sein Antriebselement zur aktiven Haptik-Rückmeldebewegung in Lateralbewegungsrichtung außerhalb des Massenschwerpunkts des Bedienelements an diesen an. Hierdurch kommt es dann ohne entsprechende Maßnahmen zwangsweise zu einer Verkippung des Bedienelements, was unerwünscht ist. Bekannte Lösungen zielen auf eine Zwangsführung mit entsprechender Auslegung des Federsystems ab, mit dem das Bedienelement am Gehäuse der Bedieneinheit gelagert ist. All dies ist mechanisch aufwendig.

Daher sieht diese Weiterbildung der Erfindung vor, das Bedienelement und den Aktuator mechanisch derart relativ zueinander ausgerichtet anzuordnen, dass der Massenschwerpunkt des Bedienelements auf der Wirkbewegungsachse des Antriebselements liegt. Auf der Verlängerung der Wirkbewegungsachse des Antriebselements liegt also der Massenschwerpunkt des Bedienelements. Die Wirkbewegungsachse des Antriebselements verläuft dabei also in einem spitzen Winkel zur beabsichtigten Lateralbewegungsrichtung für das aktive haptische Feedback. Indem das Bedienelement also längs der Wirkbewegungsachse des Antriebselements bewegt wird, weist die Feedbackbewegung des Bedienelements neben der beabsichtigten Lateralbewegungskomponente auch eine Vertikalbewegungskomponente auf, was aber nicht weiter störend ist. Vielmehr entscheidend ist, dass die Bedienoberfläche des Bedienelements beim aktiven haptischen Feedback ihre Ausrichtung im Raum beibehält, also eine schräg gerichtete Parallelverschiebung erfährt.

Grundsätzlich gilt also, dass auf Grund der Anregung des Bedienelements für die haptische Rückmeldung die resultierende Bewegung des Bedienelements in Form einer lateralen Hauptbewegung und einer zur Bedienoberfläche normalen Nebenbewegung erfolgt. Je nach Anstellwinkel der Anregung kann die Normalbewegungskomponente in ihrer Größe variieren. Es findet also im Regelfall keine reine Lateralbewegung statt.

Durch diese Maßnahme ist es möglich, die aktive haptische Feedback-Bewegung rein translatorisch auszuführen (und zwar mit Vertikal- und Lateralbewegungskomponenten), indem die Wirkrichtung des Antriebselements durch den Massenschwerpunkt des Bedienelements verläuft.

Rotatorische Bewegungsanteile beim aktiven haptischen Feedback des Bedienelements werden weiter reduziert, indem die Rückholfederelemente, mit deren Hilfe das Bedienelement nach einem aktiven haptischen Feedback wieder in die Ausgangsposition zurück bewegt werden, in einer gemeinsamen Ebene mit dem Massenschwerpunkt des Bedienelements liegen. Hierbei fallen die Federwirksachsen mit der Wirkbewegungsachse des Antriebselements des Aktuators zusammen. Wäre dies nicht der Fall, so würde das Muster der aktiven haptischen Feedbackbewegung des Bedienelements rotatorische Anteile aufweisen. Aus Bauraumgründen werden die Federwirksachsen typischerweise parallel zur Wirkbewegungsachse des Antriebselements des Aktuators verlaufen, und zwar beidseitig dieser Wirkbewegungsachse, wodurch ungewollte Momente, die auf das Bedienelement bei dessen Rückbewegung in die Ausgangsposition wirken könnten, weitestgehend neutralisiert sind.

Ferner ist es vorteilhaft, die Haptik aktiv in Hin- und Rückweg zu steuern oder zu regeln. Hierfür ist es mitentscheidend, dass die Bewegung des Bedienelements möglichst rein translatorisch ist, was durch den erfindungsgemäßen Ansatz realisierbar ist. Ferner lässt sich durch den erfindungsgemäßen Ansatz im Wesentlichen sicherstellen, dass das haptische Empfinden unabhängig vom Betätigungsort auf der Bedienoberfläche immer gleich ist. Aufwendige konstruktive Lösungen zur federnden Lagerung des Bedienelements dergestalt, dass dieses eine reine translatorische Bewegung ausführt, sind nach der Erfindung nicht mehr erforderlich.

Zweckmäßig ist es, wenn die Lateralbewegungsachse des Bedienelements und die Wirkbewegungsachse des Antriebselements des Aktuators eine gemeinsame, im Wesentlichen orthogonal zur Bedienoberfläche stehende Vertikalebene aufspannen.

In weiterer Ausgestaltung der Erfindung kann vorgesehen sein, dass das Gehäuse unterhalb des Bedienelements einen Bauraum aufweist und dass der Aktuator zur Erzielung eines kleinstmöglichen Winkels zwischen der Wirkbewegungsachse des Antriebselements des Aktuators und der Lateralbewegungsachse des Bedienelements so nah wie bauraumbedingt möglich unterhalb des Bedienelements und/oder soweit wie bauraumbedingt möglichst weit von dem Massenschwerpunkt des Bedienelements entfernt angeordnet ist. Je kleiner der Winkel zwischen der Wirkbewegungsachse des Aktuators und der Lateralbewegungsachse des Bedienelements ist, desto größer ist der Lateralbewegungsanteil des Bedienelements in Relation zum Lateralbewegungsanteil bei der Feedback-Bewegung.

Bei einer weiteren Ausgestaltung der Erfindung weist die Bedieneinheit beidseitig des Bedienelements angeordnete Rückholfederelemente für das Bedienelement mit Federwirkachsen auf, die auf der Lateralbewegungsachse liegen oder die in einer Ebene, die im Wesentlichen orthogonal zur von der Wirkbewegungsachse des Antriebselements des Aktuators und der Lateralbewegungsachse des Bedienelements aufgespannten Ebene ist, liegen sowie symmetrisch zur Lateralbewegungsachse angeordnet sind.

Die Erfindung wird nachfolgend anhand eines Ausführungsbeispiels und unter Bezugnahme auf die Zeichnung näher erläutert. Im Einzelnen zeigen:

Fig. 1    schematisch und in Seitenansicht eine Bedieneinheit für eine Fahrzeugkomponente mit als Displayelement ausgeführtem Bedienelement und federelastischer Lagerung sowie aktivem haptischen Feedback zur Betätigung des Bedienelements,

Fig. 2    eine Darstellung eines Elektromagneten, ausgebildet als Zugankermagnet mit Stator und Anker zur grundsätzlichen Erläuterung der elektromagnetisch relevanten Eigenschaften eines derartigen Elektromagneten,

Fig. 3    eine perspektivische Darstellung des als Doppelelektromagnet ausgebildeten Aktuators für die aktive haptische Rückmeldung und

Fig. 4    eine mögliche Beschaltung des Elektromagneten gemäß Fig. 3.

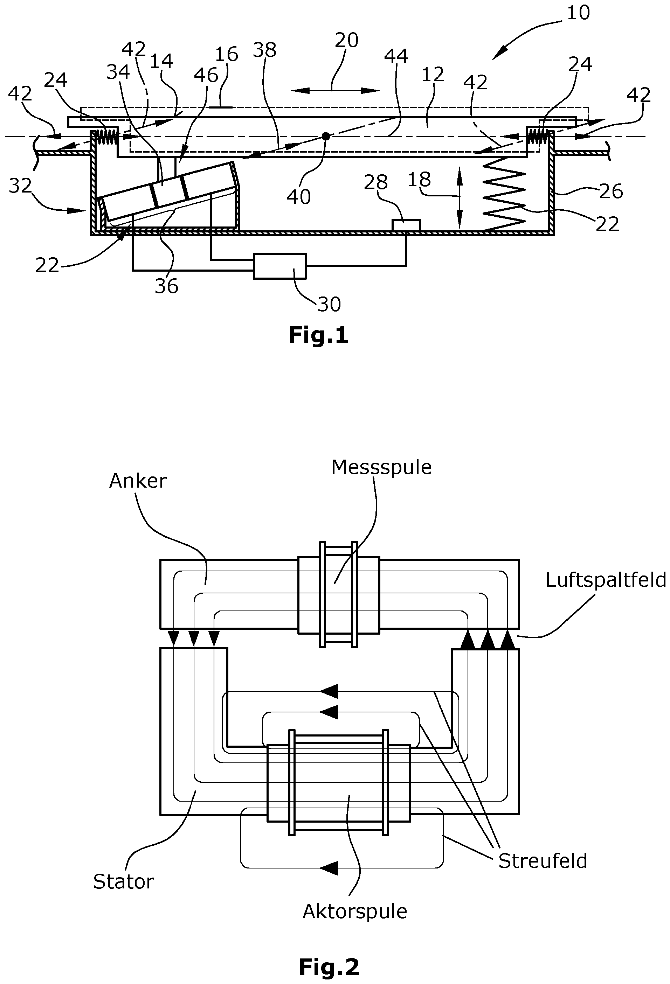

In Fig. 1 ist in Seitenansicht und schematisch eine Bedieneinheit 10 gezeigt, die ein Bedienelement 12 aufweist. Das Bedienelement 12 ist in diesem Ausführungsbeispiel als Display-Baugruppe mit einer Bedienoberfläche 14 ausgeführt, auf der eine Vielzahl von Symbolfeldern 16 darstellbar ist. Das Bedienelement 12 ist im Regelfall hinterleuchtet.

Zur Ausführung einer Betätigungsbewegung in Vertikalbewegungsrichtung (siehe den Doppelpfeil 18) sowie zur Bestätigung einer derartigen Betätigungsbewegung in lateraler Richtung (siehe den Doppelpfeil 20 in Fig. 1) ist das Bedienelement 12 über erste Federn 22 sowie zweite Federn 24 elastisch an einem Gehäuse 26 gelagert. Mittels eines Sensors 28 lässt sich feststellen, dass sich das Bedienelement längs der Vertikalbewegungsachse 18 bewegt hat. Dies wird in einer Auswerte- und Ansteuereinheit 30 ermittelt, woraufhin diese einen als Elektromagneten ausgeführten Aktuator 32 ansteuert, der ein Antriebselement 34 aufweist. Der feststehende Statorteil 36 des Aktuators 32 stützt sich am Gehäuse 26 ab, während das Antriebselement 34 des Aktuators 32 mechanisch mit dem Bedienelement 12 gekoppelt ist. Die Wirkbewegungsachse des Antriebselements 34 ist anhand des Doppelpfeils 38 dargestellt.

Je größer und aufwendiger das Bedienelement 12 konstruiert ist, umso schwerer ist es und umso mehr Bauraum nimmt es ein. Wenn nun gefordert wird, dass das haptische Feedback über die gesamte Bedienoberfläche 14 betrachtet gleich sein soll, so sollte das Bedienelement 12 beim haptischen Feedback ausschließlich eine translatorische Bewegung vollführen. Theoretisch gelingt dies in einfachster Weise dadurch, dass das Antriebselement 34 des Aktuators 32 im Massenschwerpunkt 40 des Bedienelements 12 angreift. Dies ist aber aufgrund der Bauraumgegebenheiten nicht möglich.

Will man nun dennoch erreichen, dass sich das Bedienelement 12 beim aktiven haptischen Feedback ausschließlich translatorisch bewegt, so besteht eine konstruktiv vergleichsweise einfache Lösung darin, den Aktuator 32 derart anzuordnen, dass der Massenschwerpunkt 40 des Bedienelements 12 auf der Wirkbewegungsachse 38 des Antriebselements 34 des Aktuators 32 liegt. Dies ist in Fig. 1 gezeigt, wobei in Fig. 1 auch dargestellt ist, wie sich das Bedienelement 12 aktiv bewegt, wenn eine Betätigungsbewegung erkannt und die Betätigung des Bedienelements 12 durch haptisches Feedback rückbestätigt wird. Hierbei ist noch zu bemerken, dass die zweiten Federelemente 24 bzw. deren Federwirkachsen 42 idealerweise in einer Ebene liegen, in der sich auch der Massenschwerpunkt 40 befindet und in der die Wirkbewegungsachse 38 des Aktuators 32 liegt, wobei die Wirkachsen des Aktuators 32 und der zweiten Federn 24 auf einer gemeinsamen Linie liegen oder parallel zur Wirkbewegungsachse 38 des Aktuators 32 verlaufen (in Fig. 1 ist dies durch die gestrichelten Doppelpfeile 42 angedeutet).

Im Wesentlichen orthogonal zu dieser Ebene 44 verläuft diejenige Ebene, die durch die Lateralbewegungsachse 20 des Bedienelements 12 und die Wirkbewegungsachse 38 des Antriebselements 34 des Aktuators 32 aufgespannt wird. Bei dieser Ebene handelt es sich bezogen auf Fig. 1 um die Zeichnungsebene.

Die rein translatorische Bewegung des Bedienelements 12 beim aktiven haptischen Feedback weist also sowohl eine Lateral- als auch eine Vertikalkomponente auf. Dass diese Feedbackbewegung nicht rein lateral ist, spielt dafür, dass das haptische Empfinden über die gesamte Bedienoberfläche 14 des Bedienelements 12 gleich sein soll, keine Rolle. Entscheidend ist, dass das Bedienelement 12 beim aktiven haptischen Feedback keinerlei rotatorische Bewegungsanteile erfährt, es also insoweit zu einer Parallelverschiebung des Bedienelements 12 im Raum kommt.

Wie bereits weiter oben beschrieben, setzt man aus insbesondere Bauraum- und Kostengründen für das haptische Feedback von Bedienelementen oftmals als Aktuator einen Elektromagneten ein. Die von diesem Elektromagneten aufgebrachte Kraft kann nur mit erhöhtem Aufwand abgeschätzt werden und hängt ganz wesentlich vom Strom und Luftspalt des Elektromagneten ab. Die insoweit geltenden Gegebenheiten bei einem Elektromagneten sollen nachfolgend anhand von Fig. 2 verdeutlicht werden.

In Fig. 2 ist ein Elektromagnet dargestellt, dessen Stator und Anker aus hochpermeablen Materialien (üblicherweise Automatenstahl oder Elektroblech) besteht, und dessen Magnetfeld mittels einer bestromten Erregerspule aufgebaut wird.

Die Kraft eines solchen Elektromagneten wird üblicherweise aus dem Erregerstrom und der Luftspaltgröße berechnet. Der Kraftverlauf im Falle des haptischen Feedbacks ist jedoch sehr dynamisch mit Frequenzanteilen oberhalb von 1 kHz. Hierbei ist der Zusammenhang zwischen Strom und Kraft bei üblich verwendeten Automatenstählen oder Elektroblechen zur Magnetflussführung nicht trivial und nur durch eine sehr aufwendige Modellierung beschreibbar. Dazu kommt noch, dass der Luftspalt wegen der mechanischen Toleranzen und der Bewegung der Bedienoberfläche nicht genau bekannt ist, und somit die Kraftwirkung des Aktuators nur grob abschätzbar ist. Unter Verwendung der "Maxwellschen Zugkraftformel" und einer Messspule zur Ermittlung der magnetischen Flussdichte im Luftspalt kann dieses Problem umgangen werden, wobei eine Spannungsmessung in aller Regel kostengünstiger gestaltet werden kann als eine Strommessung:

$$F = \frac{B_L^2 A_L}{2\mu_0}$$

(F - Aktuatorkraft, $\mu_0$ - Permeabilität der Luft, $A_L$ - Luftspaltfläche, $B_L$ - Magnetflussdichte im Luftspalt)

Die relativ geringe Inhomogenität der Luftspaltflussdichte in praktischen Ausführungen kann durch einen Korrekturfaktor berücksichtigt werden, was wiederum zu einer einfachen Realisierung einer Kraftmessung mittels einer Messspule führt:

$$F(t) = \frac{C}{\mu_0 A_L}\left(\frac{1}{N_{MS}}\int_0^t u(t')dt'\right)^2$$

(t - Zeit, C - Luftspaltkorrekturfaktor, $N_{MS}$ - Windungszahl der Messspule, u(t) - induzierte Spannung in der Messspule)

Die Integration der induzierten Spannung kann digital mit einem in der Regel im System schon vorhandenen Mikrocontroller ausgeführt werden. Somit ist die Kraft zu jedem Zeitpunkt der Ansteuerung bekannt.

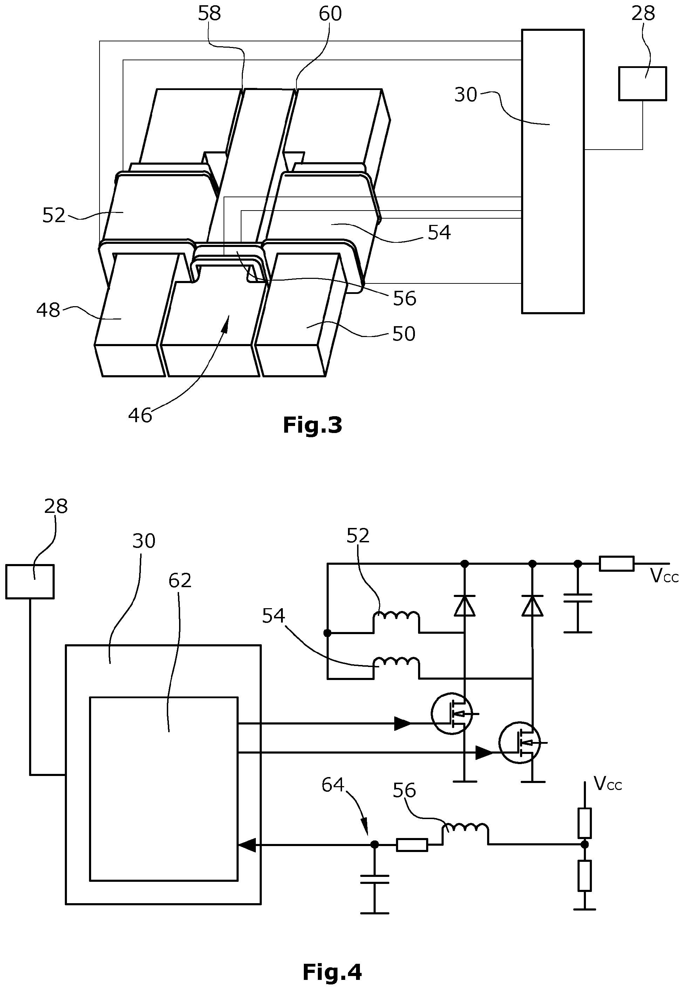

Fig. 3 zeigt den Aktuator 32 in perspektivischer Ansicht. Dieser Aktuator 32 ist als Doppelelektromagnet ausgebildet, dessen Antriebselement 34 als Anker 46, der zwischen einem ersten Stator 48 und einem zweiten Stator 50 angeordnet ist, in zwei entgegengesetzten Richtungen längs der Wirkbewegungsachse 38 Kraft aufbauen kann.

Der erste und der zweite Stator 48, 50 sind am Gehäuse 26 befestigt, während der Anker 46 mit dem Bedienelement 12 fest verbunden ist. Der erste Stator 48 weist eine erste Erregerspule 52 auf, während der zweite Stator 50 mit einer zweiten Erregerspule 54 versehen ist. Der Anker 46 ist von einer Messspule 56 umgeben. Beidseitig des Ankers 46 befindet sich jeweils ein erster bzw. ein zweiter Luftspalt 58, 60. Da die auf den Anker 46 wirkende Kraft jeweils in eine Richtung gerichtet sein soll, werden die Erregerspulen 52, 54 entsprechend nicht gleichzeitig, sondern abwechselnd bestromt. Mit dem Aufbau der Messspule 56 am Anker 46 wird eine genaue und kostengünstige Kraftmessung in beiden Wirkrichtungen längs der Wirkbewegungsachse 38 ermöglicht.

Die Ansteuerung und die Auswertung der in der Messspule 56 induzierten Spannung können beispielhaft mittels eines Mikrocontrollers 62 erfolgen, der Teil der Auswerte- und Ansteuereinheit 30 sein kann. Ein Beispiel für eine Beschaltung mit dem Mikrocontroller 62 ist in Fig. 4 gezeigt. Die induzierte Spannung in der Messspule 56 wird zunächst durch einen einfachen Tiefpass 64 geglättet, um die PWM-Taktung (Frequenz in der Regel > 20 kHz) zur wechselweisen Ansteuerung der beiden Erregerspulen 52, 54 aus dem Messsignal zu eliminieren. Danach erfasst der Mikrocontroller 62 die induzierte Spannung und integriert sie digital. Die Grenzfrequenz des Tiefpasses 64 sollte ausreichend höher als die höchsten Frequenzanteile des Kraftverlaufs liegen.

## BEZUGSZEICHENLISTE

| | |
|---|---|
| 10 | Bedieneinheit |
| 12 | Bedienelement |
| 14 | Bedienoberfläche des Bedienelements |
| 16 | Symbolfelder |
| 18 | Vertikalbewegungsachse des Bedienelements |
| 20 | Lateralbewegungsachse des Bedienelements |
| 22 | Federelemente |
| 24 | Federelemente |
| 26 | Gehäuse |
| 28 | Sensor |
| 30 | Ansteuereinheit |
| 32 | Aktuator |
| 34 | Antriebselement des Aktuators |
| 36 | Statorteil des Aktuators |
| 38 | Wirkbewegungsachse des Aktuators |
| 40 | Massenschwerpunkt des Bedienelements |
| 42 | Federwirkachse |
| 44 | Ebene |
| 46 | Anker |
| 48 | Stator |
| 50 | Stator |
| 52 | Erregerspule |
| 54 | Erregerspule |
| 56 | Messspule |
| 58 | Luftspalt |
| 60 | Luftspalt |
| 62 | Mikrocontroller |
| 64 | Tiefpass |

## Patentansprüche

1. Bedieneinheit für eine Fahrzeugkomponente, insbesondere Infotainment-System zur Steuerung diverser Fahrzeugkomponenten, mit

- einem Gehäuse (26) mit einer Vorderseite,
- einem an der Vorderseite des Gehäuses (26) angeordneten Bedienelement (12), das eine Bedienoberfläche (14) aufweist, wobei das Bedienelement (12) federelastisch gelagert ist,
- mindestens einem Sensor (28) zur Erfassung einer Betätigungsbewegung des Bedienelements (12),
- mindestens einem Aktuator (32) zur Rückmeldebewegung des Bedienelements (12) bei einer durch den Sensor (28) erfassten Betätigungsbewegung des Bedienelements (12) und
- einer Auswerte- und Ansteuereinheit (30), die mit dem mindestens einen Sensor (28) und mit dem Aktuator (32) verbunden ist,

**dadurch gekennzeichnet, dass**

- der Aktuator (32) als Zuganker-Elektromagnet mit einem ersten Stator (48), der eine erste Erregerspule (52) aufweist, und einem Anker (46) als Antriebselement (34) ausgebildet ist,
- der Anker (46) mit einer Messspule (56) versehen ist, an der eine Messspannung anliegt, wenn der Anker (46) von einem durch die erste Erregerspule (52) erzeugten Magnetfluss durchdrungen ist, und
- die erste Erregerspule (52) und die Messspule (56) mit der Auswerte- und Ansteuereinheit (30) verbunden sind, wobei mittels der Auswerte- und Ansteuereinheit (30) die Kraft steuerbar und/oder regelbar ist, mit der der Anker (46) des Aktuators (32) in Richtung auf den ersten Stator (48) zu bewegbar ist und/oder mit der die Auslenkbewegung des Ankers (46) aus dessen Ruheposition sowie die Zurückbewegung des Ankers (46) in dessen Ruheposition erfolgt.

2. Bedieneinheit nach Anspruch 1, **dadurch gekennzeichnet**, der Zuganker-Elektromagnet einen zweiten Stator (50) mit einer zweiten Erregerspule (54) aufweist, wobei die beiden Statoren (48, 50) beidseitig des Ankers (46) angeordnet sind, und dass auch die zweite Erregerspule (54) mit der Auswerte- und Ansteuereinheit (30) verbunden ist, wobei mittels der Auswerte- und Ansteuereinheit (30) die jeweilige Kraft steuerbar und/oder regelbar ist, mit der der Anker (46) in die jeweilige Richtung auf den ersten bzw. zweiten Stator (48, 50) zu bewegbar ist, und/oder die Auslenkbewegung des Ankers (46) aus dessen Ruheposition sowie die Zurückbewegung des Ankers (46) in dessen Ruheposition steuerbar ist.

## Claims

1. An operating unit for a vehicle component, in particular an infotainment system for operating various vehicle components, having

- a housing (26) having a front face,

- an operating element (12) arranged on said front face of said housing (26), which comprises an operating surface (14), wherein said operating element (12) is spring-elastically mounted,
- at least one sensor (28) for detecting an actuation movement of said operating element (12),
- at least one actuator (32) for a feedback movement of said operating element (12) in the case of an actuation movement of said operating element (12) detected by said sensor (28), and
- an analysis and control unit (30) which is connected to said at least one sensor (28) and said actuator (32),

**characterized in that**

- said actuator (32) is configured as an armature-type electromagnet having a first stator (48) comprising a first excitation coil (52), and an armature (46) as a drive element (34),
- said armature (46) is provided with a measuring coil (56) to which a measuring voltage is applied when a magnetic flux generated by said first excitation coil (52) flows through said armature (46), and
- said first excitation coil (52) and said measuring coil (56) are connected to said analysis and control unit (30), wherein by means of said analysis and control unit (30) the force is adapted to be controlled and/or regulated with the aid of which said armature (46) of said actuator (32) is adapted to be moved towards said first stator (48) and/or with the aid of which the deflection movement of said armature (46) out of its rest position as well as the return movement of said armature (46) into its rest position are adapted to be controlled and/or regulated.

2. The operating unit according to claim 1, **characterized in that** the armature-type electromagnet comprises a second stator (50) having a second excitation coil (54), wherein the two stators (48, 50) are arranged on both sides of the armature (46), and that said second excitation coil (54) is also connected to the analysis and control unit (30), wherein by means of said analysis and control unit (30) the respective force is adapted to be controlled and/or regulated with the aid of which said armature (46) is adapted to be moved into the respective direction towards the first and/or the second stator (48, 50) and/or the deflection movement of said armature (46) out of its rest position as well as the return movement of said armature (46) into its rest position are adapted to be controlled.

**Revendications**

1. Unité de commande pour composant de véhicule, en particulier système d'infodivertissement, destinée au pilotage de divers composants du véhicule, avec

- un boîtier (26) doté d'une face avant,
- un élément de commande (12) agencé sur la face avant du boîtier (26), lequel comporte une surface de commande (14), dans laquelle l'élément de commande (12) est disposé de manière élastique,
- au moins un capteur (28) pour détecter un mouvement d'actionnement de l'élément de commande (12),
- au moins un actionneur (32) destiné à un mouvement de rétroaction de l'élément de commande (12) lors d'un mouvement d'actionnement de l'élément de commande (12) détecté par le capteur (28) et
- une unité de contrôle et de pilotage (30), laquelle est raccordée à l'au moins un capteur (28) et à l'actionneur (32),

**caractérisée en ce que**

- l'actionneur (32) est conçu comme électro-aimant à armature de traction avec un premier stator (48), lequel comporte une première bobine excitatrice (52), et avec une armature (46) comme élément d'entraînement (34),
- l'armature (46) est prévue avec une bobine de mesure (56), aux bornes de laquelle existe une tension de mesure lorsque l'armature (46) est parcourue par un flux magnétique produit par la première bobine excitatrice (52), et
- la première bobine excitatrice (52) et la bobine de mesure (56) sont reliées à l'unité de contrôle et de pilotage (30), dans laquelle l'unité de contrôle et de pilotage (30) permet de piloter et/ou de régler la force avec laquelle l'armature (46) de l'actionneur (32) est mobile dans la direction du premier stator (48) et/ou avec laquelle s'effectue le mouvement de déviation de l'armature (46) hors de sa position de repos ainsi que le mouvement de retour de l'armature (46) dans sa position de repos.

2. Unité de commande selon la revendication 1, **caractérisée en ce que** l'électro-aimant à armature de traction comporte un deuxième stator (50) doté d'une deuxième bobine excitatrice (54), dans laquelle les deux stators (48, 50) sont agencés des deux côtés de l'armature (46) et **en ce que** la deuxième bobine excitatrice (54) est également reliée à l'unité de contrôle et de pilotage (30), dans laquelle l'unité de contrôle et de pilotage (30) permet de piloter et/ou de régler la force respective avec laquelle l'armature (46) est mobile dans la direction respective du premier ou du deuxième stator (48, 50) et/ou de piloter le mouvement de déviation de l'armature (46) hors de sa position de repos ainsi que le mouvement de retour de l'armature (46) dans sa position de repos.

**Fig.1**

**Fig.2**

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008035907 A
- DE 102012000568 A
- FR 2927709 A
- DE 102009007243 A
- WO 2006124873 A
- DE 10043805 A
- DE 202011004616 U